# EUROPEAN PATENT APPLICATION

(11) **EP 2 247 008 A1**
(43) Date of publication of application: **03.11.2010**
(21) Application number: 08711067.2
(22) Date of filing: 08.02.2008
(51) Int. Cl.: H04J 3/07

(54) **RADIO TRANSMITTING DEVICE AND RADIO TRANSMITTING METHOD**

(71) Applicant: NEC Corporation, Minato-ku Tokyo 108-8001 (JP)
(72) Inventor: TANIMOTO, Shinji, Tokyo 108-8001 (JP)
(74) Representative: Glawe, Delfs, Moll
(86) International application number: PCT/JP2008/052188
(87) International publication number: WO 2009/098783

(57) **Abstract**

The present invention provides a radio transmission device that transmits PDH data signal strings and LAN data efficiently. Each of radio frame multiplexing circuits(MUX)(4-a, 4-b) generates radio frame data by multiplexing multiplexed data inputted from a LAN terminating circuit (3-a, 3-b), into the transmission area of a radio frame, and by assigning the transmission area of the radio frame other than the area, to which LAN-received data is assigned, as the transmission area of PDH data signal strings; inserts data assignment information into a radio over-header; and transmits the data from a radio transmitting/receiving circuit to a remote device via a transmission line. Each of radio frame demultiplexing circuits (DEMUX) (5-a, 5-b) demultiplexes the multiplexed data based on the data assignment information in the radio over-header.

## Description

### TECHNICAL FIELD

The present invention relates to a radio transmission device and a radio transmission method for transmitting line data signal strings and LAN data.

### BACKGROUND ART

A radio transmission device in the related art transmits data by multiplexing a plurality of PDH(Plesiochronous Digital Hierarchy) data signal strings into a radio frame. The widespread use of LAN(Local Area Network) networks increases the need for LAN data transmission via a radio transmission line by installing the LAN interface. Patent Document 1 discloses the configuration, such as that shown in Fig. 6, as a radio transmission device that simultaneously transmits line data signal strings and LAN data.

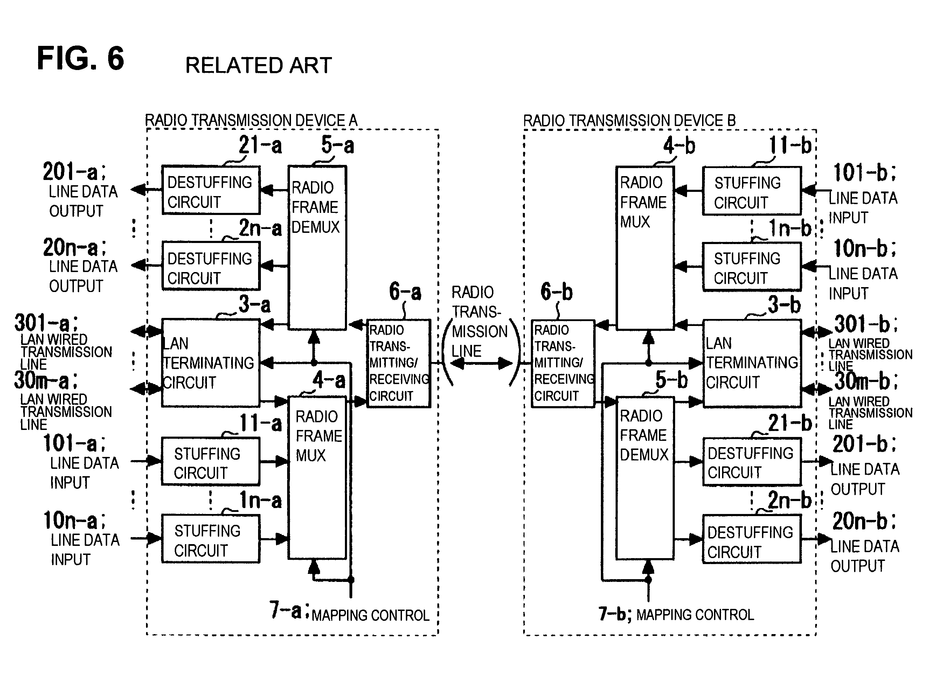

Referring to Fig. 6, radio transmission device A and radio transmission device B are transmission devices each having an input/output interface for n(n is a natural number) PDH data signal strings and an interface for m(m is a natural number) LAN wired transmission lines and each having the radio transmission capacity capable of accommodating n PDH data signal strings. When the radio transmission device transmits PDH data signal strings, stuffing circuits 11-a to 1n-a stuff-synchronize PDH data signal string inputs (line data inputs) 101-a to 10n-a with a radio frame frequency and, after a radio frame multiplexing circuit(MUX) 4-a multiplexes the data into a radio frame by a radio frame multiplexing circuit(MUX) 4-a, a radio transmitting/receiving circuit 6-a modulates the radio frame and transmits it to an opposing radio transmission device B via the radio transmission line. In the radio transmission device B, a radio transmitting/receiving circuit 6-b demodulates the data received from the radio transmission device A and, after a radio frame demultiplexing circuit(DEMUX) 5-b establishes the radio frame synchronization, destuffing circuits 21-b to 2n-b extracts the PDH data signal strings multiplexed in the radio frame, performs destuffing processing and outputs PDH data signal strings (line data outputs) 201-b to 20n-b.

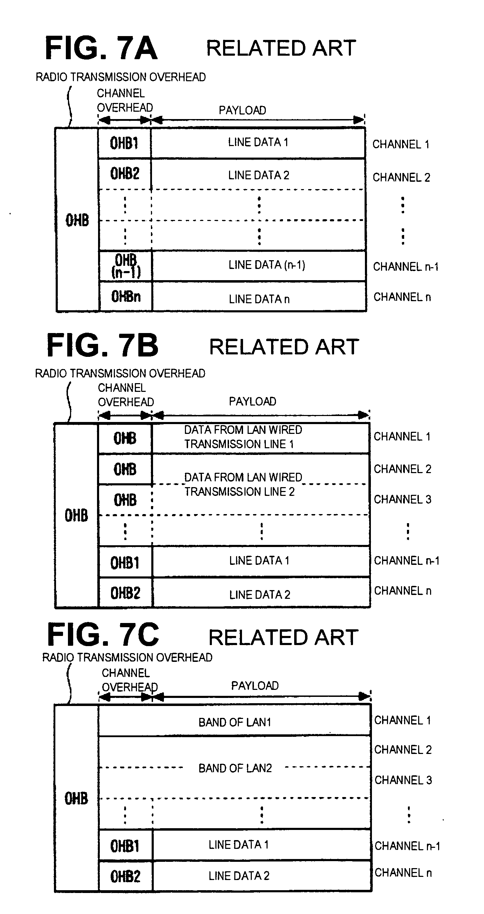

As shown in Fig. 7A, radio frame data is composed of a radio transmission overhead (also called "radio frame header") OHB, overheads OHB1-OHBn for n channels, and a payload. The radio transmission overhead OHB includes multiplexed information necessary for radio transmission such as frame bits, alarm information, and auxiliary information. The payload of each channel includes the multiplexed signal of one PDH data signal string, and each of the overheads OHB1-OHBn, provided one for each channel, includes stuff information and alarm information on one of the PDH data signal strings multiplexed in the payload.

When all channels of a radio frame are assigned for transmission of PDH data signal strings, n PDH data signal string inputs (line data inputs) 101-a to 10n-a, externally supplied to the radio transmission device A, are synchronized in the stuff synchronization scheme with a radio frame frequency by the stuffing circuits 11-a to 1n-a to which the inputs are connected and, after being multiplexed by the radio frame multiplexing circuit(MUX) 4-a into the channels of the radio frame, modulated via the radio transmitting/receiving circuit 6-a and output to the radio transmission line. The received data received by the radio transmission device B from the radio transmission line, is demodulated by the radio transmitting/receiving circuit 6-b and supplied to the radio frame demultiplexing circuit(DEMUX) 5-b. The radio frame demultiplexing circuit(DEMUX) 5-b extracts the PDH data signal strings from the channels of the radio frame data, and the corresponding destuffing circuits 21-b to 2n-b perform the destuff operation and outputs the data to the destinations, external to the radio transmission device, as the PDH data signal string outputs (line data outputs) 201-b to 20n-b.

When LAN-received data inputted from the LAN wired transmission lines is transmitted using the payload of the channels of a radio frame, a LAN terminating circuit 3-a once accumulates reception data, received from LAN wired transmission lines 301-a to 30m-a, into receive buffers (not shown), outputs the LAN-received data, one packet at a time, according to the read control signal, and generates multiplexed data to be stored in a radio frame according to the mapping control signal 7-a. The LAN-received data inputted from the LAN wired transmission lines 301-a to 30m-a via the receive buffers, is output at the multiplexing data speed on a per channel basis that is set by the mapping control signal 7-a.

Referring to Fig. 7B, the band of channel 1 is assigned to the LAN-received data inputted from the LAN wired transmission line 301-a, the bands of channels 2 and 3 of the payload are assigned to the LAN-received data inputted from the LAN wired transmission line 302-a, and the remaining channels of the payload are assigned as PDH data signal strings. In this way, the independent radio-side bands may be set for individual LAN wired transmission lines by means of the mapping control signal 7-a to guarantee the radio-side bands corresponding to the individual LAN wired transmission lines.

In addition, Patent Document 1 describes that, when LAN-received data is assigned to a channel of a radio frame, not only the payload of the corresponding channel but also the overhead bits of the channel may be assigned as the LAN data area, as shown in Fig. 7C, to increase the transmission capacity of LAN data.

Patent Document 1: Japanese Patent Kokai Publication No. JP2005-244328A

### DISCLOSURE OF THE INVENTION

### PROBLEMS TO BE SOLVED BY THE INVENTION

The disclosure of Patent Document 1 is hereby incorporated by reference into this specification. The following gives an analysis of the technology related to the present invention.

In the related art described above, though the line data signal strings and LAN data can be multiplexed in a radio frame for transmission, with the detailed study conducted by the inventor of the present invention, it turned out that adding some improvements will further increase transmission efficiency and throughput.

For example, the radio frames shown in Fig. 7A and Fig. 7B require that the data phases be synchronized on a per line data signal string basis. That is, the phases of the starts of n channels, OHB1-OHBn, must be synchronized (channel synchronization). In addition, the transmission of LAN data over the PDH E1 access link involves a decrease in the transmission capacity due to E1 framing. Furthermore, the need to absorb phase variations increases the amount of delay.

In addition, though the transmission capacity of LAN data can be increased in the radio frame configuration shown in Fig. 7C where the channel overhead bits are assigned as the LAN data area, the problem is that the data is instantaneously interrupted when the assignment of channels to LAN data is changed or when the transmission capacity is changed.

For example, when the channel assignment (transmission capacity) of a radio frame transmitted from the transmitting station side (for example, radio transmission device A in Fig. 6) is changed but if the receiving station side (for example, radio transmission device B in Fig. 6) has not received the changed channel assignment information at the time the radio frame is received and demultiplexed before receiving the radio frame, the data is demultiplexed (serial-to-parallel conversion) according to the channel assignment before the change. This generates a reception data error and decreases the throughput. Referring to Fig. 6, the mapping control signal is supplied from the higher-level device (management device), not shown to the radio transmission devices of the transmitting station and the receiving station, respectively, and, in this case, a channel assignment inconsistency may be generated between the transmitting station and the receiving station due to a time delay difference, skew, and so on. The establishment of synchronization of the mapping control signal between the transmitting station and the receiving station requires handshaking processing between radio frames, resulting in a decrease in the radio transmission throughput.

Accordingly, it is an object of the present invention to provide a radio transmission device and a radio transmission method for radio-transmitting line data and LAN data using radio frames efficiently and at high throughput even when the channel configuration of a radio frame is changed.

### MEANS TO SOLVE THE PROBLEMS

To solve the problems described above, the invention disclosed in this application provides the following general configuration.

According to one aspect of the present invention, there is provided a radio transmission device that stuff-multiplexes a plurality of line data signal strings into a radio frame to transmit the radio frame, the device comprising a means that inserts channel assignment information on data in a payload of a radio frame, into a radio transmission overhead and that multiplexes LAN data or LAN data and line data into the payload of the radio frame to perform radio-transmission of the multiplexed data.

In the present invention, the LAN data, which is not subjected to framing processing, is mapped from a buffer, in which the LAN data is stored, directly into the radio frame, the framing processing performed for the line data signal strings.

According to another aspect of the present invention, there is provided a radio transmission device comprising a means that on receipt of a radio frame whose radio transmission overhead includes channel assignment information on data, performs demultiplexing of LAN data or LAN data and line data multiplexed in a payload of the radio frame, on the channel assignment information.

In the present invention, when LAN data is assigned to the radio frame, both the payload of a corresponding channel and overhead bits of the channel are assigned as a LAN data area.

In the present invention, a mapping control signal for the radio frame is received and, based on the mapping control signal, LAN data, inputted from a LAN wired transmission line, is mapped into a specified transmission area in the radio frame allowing PDH(Plesiochronous Digital Hierarchy) or SDH(Synchronous Digital Hierarchy) data and LAN data to be transmitted at the same time.

According to the present invention, there is provided a radio transmission method comprising the steps of:
inserting channel assignment information on data in a payload of a radio frame into a radio transmission overhead; and
multiplexing LAN data or LAN data and line data into the payload of the radio frame to perform radio-transmission of the multiplexed data.

In the method according to the present invention, the LAN data, which is not subjected to framing processing, is mapped from a buffer, in which the LAN data is stored, directly into the radio frame, the framing processing performed for the line data signal strings.

According to the present invention, there is provided a radio transmission method comprising the step of:
receiving a radio frame whose over-header includes channel assignment information on data; and
demultiplexing of LAN data or LAN data and line data the LAN data multiplexed in a payload of the radio frame, based on the channel assignment information.

In the method according to the present invention, when LAN data is assigned to the radio frame, both the payload of a corresponding channel and overhead bits of the channel are assigned as a LAN data area.

### EFFECT OF THE INVENTION

According to the present invention, the channel assignment information on data in a payload of a radio frame is included in a radio overhead to allow data to be transmitted without instantaneous interruptions even if LAN data is assigned to any channels, thus enabling high-efficiency, high-throughput transmission.

### BRIEF DESCRIPTION OF THE DRAWINGS

Fig. 1 is a diagram showing the configuration of one exemplary embodiment of the present invention.
Fig. 2 is a diagram showing an example of the frame format used in one exemplary embodiment of the present invention.
Fig. 3 is a diagram showing a change in radio frames in one exemplary embodiment of the present invention.
Fig. 4 is a diagram showing the configuration of the main part of the LAN terminating circuit in one exemplary embodiment of the present invention.
Figs. 5A, 5B and 5C are diagrams showing examples of the configuration of the port distribution circuit of the LAN terminating circuit.
Fig. 6 is a diagram showing the configuration of the related technology (Patent Document 1).
Figs. 7A, 7B and 7C are diagrams showing examples of the frame format of the related technology.

### EXPLANATIONS OF SYMBOLS

11-a,...1n-a,11-b,...1n-b Stuffing circuit
21-a,...2n-a,21-b,...2n-b Destuffing circuit
3-a,3-b LAN terminating circuit
4-a,4-b Radio frame multiplexing circuit(MUX)
41-a,41-b Radio header creation unit
5-a,5-b Radio frame demultiplexing circuit (DEMUX)
51-a,51-b Radio header analyzing unit
6-a,6-b Radio transmitting/receiving circuit
7-a,7-b Mapping control signal
8 Port distribution circuit
101a,...10n-a,101-b,...10n-b Line data input
201-a,...20n-a,201-b,...20n-b Line data output
301-a,...30m-a,301-b,...30m-b LAN wired transmission line
311,312,...31m Receiving buffer
701,702,...70m LAN receive buffer
801,802,...80m Multiplexed data

### PREFERRED MODES FOR CARRYING OUT THE INVENTION

Exemplary embodiments of present invention will be described below. In one of modes of the present invention, with channel assignment information on data in a payload of a radio frame included in radio transmission overhead bits (OHB), LAN data or LAN data and line data are multiplexed into a transmission area of the radio frame for radio transmission.

When LAN data is assigned to a channel of a radio frame in one of modes of the present invention, the payload of the channel and the overhead bits of the channel are assigned as the LAN data area to increase the LAN data transmission capacity and, in addition, LAN data may be dynamically assigned to any channel area.

LAN data is mapped directly into a radio frame without PDH E1 framing.

The radio transmission device on the receiving side demultiplexes data (serial/parallel conversion), which is multiplexed in a radio frame, based on the channel assignment information stored in the radio transmission overhead. In one of modes of the present invention, the radio transmission device receives the mapping control signal for a radio frame and, based on the received mapping control signal, maps LAN data, received from LAN wired transmission lines, into the specified transmission area in the radio frame to allow PDH/SDH data and LAN data to be transmitted at the same time.

In one of modes of the present invention, the transmission capacity (number of channels of PDH data strings) is determined in advance and data is multiplexed directly into a radio frame, thus eliminating the need for synchronizing data phases.

The read clock of the receive buffer may be changed according to the transmission capacity. When a transmission capacity change is specified, the receive buffer data is read on a per radio frame basis with the frequency corresponding to the transmission capacity and the data is multiplexed into the corresponding payload and OHB bits.

In one of modes of the present invention, the assignment information on LAN data is multiplexed into the radio transmission overhead. By transmitting the information, which indicates in which channel and in what order the data is assigned in each radio frame, to a remote station, MUX(serial/parallel conversion) and DEMUX(parallel/serial conversion) can be performed without instantaneous interruptions.

In one of modes of the present invention, the serial/parallel numbering information is multiplexed into the radio overhead bits (OHB) to allow data to be transmitted without instantaneous interruptions even if the data is assigned to any channel.

The configuration described above reduces and minimizes the delay amount (transmission delay), increases the transmission capacity, prevents an instantaneous interruption generated by a change in the transmission capacity, and implements high-efficiency, high-throughput transmission. The following describes the invention by referring to an exemplary embodiment.

### EXEMPLARY EMBODIMENT

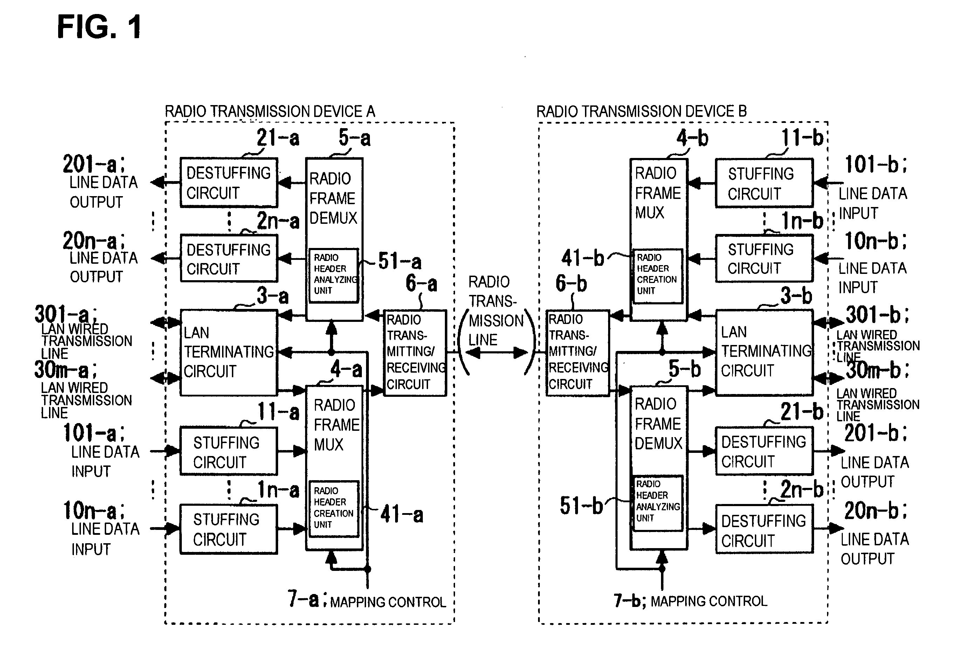

Fig. 1 is a diagram showing the configuration of an exemplary embodiment of the present invention. Referring to Fig. 1, radio transmission devices A and B are devices each having a radio transmission capacity large enough for transmitting and receiving n PDH data signal strings.

The radio transmission device A comprises stuffing circuits 11-a to 1n-a (n is a predetermined positive integer), each of which receives line data and inserts stuff pulses for synchronizing between bit strings, a radio frame multiplexing circuit(MUX) 4-a, a radio frame demultiplexing circuit (DEMUX) 5-a, a radio transmitting/receiving circuit 6-a, destuffing circuits 21-a to 2n-a, each of which performs de-stuffing processing (delete stuff pulses), and a LAN terminating circuit 3-a. The radio transmission device B has the same configuration.

The following describes the transmitting side of the radio transmission device A. A PDH data signal string input (line data input) 101-a is synchronized with the radio frame frequency in the stuff synchronization mode by the stuffing circuit 11-a and is output to the radio frame multiplexing circuit(MUX) 4-a. Similarly, the PDH data signal string input (line data input) 10n-a is stuff-synchronized with the radio frame frequency by the corresponding stuffing circuit 1n-a and is output to the radio frame multiplexing circuit(MUX) 4-a.

The radio frame multiplexing circuit(MUX) 4-a multiplexes the n stuff-synchronized PDH data signal strings, received from the stuffing circuits 11-a to 1n-a, into the radio frame transmission area and outputs the multiplexed PDH signal strings to the radio transmitting/receiving circuit 6-a. The radio frame, composed of an overhead required for radio transmission, overheads provided one for each channel, and a payload, accommodates the PDH data signal strings, one for the payload of each channel.

The overhead of a channel stores the multiplexed stuff information and alarm information on the PDH data signal string multiplexed in the payload.

The LAN terminating circuit 3-a stores LAN-received data inputted from multiple LAN wired transmission lines 301-a to 30m-a (m is a predetermined positive integer), in the receive buffer (not shown) on a per packet base. That is, the LAN terminating circuit 3-a determines the radio-frame side transmission capacity for the LAN wired transmission lines 301-a to 30m-a on a per radio frame channel base according to the mapping control signal 7-a. In addition, the LAN terminating circuit 3-a encapsulates LAN-received data inputted from the LAN wired transmission lines 301-a to 30m-a, one packet at a time, generates multiplexed data, and outputs the multiplexed data to the radio frame multiplexing circuit(MUX) 4-a.

The radio frame multiplexing circuit(MUX) 4-a multiplexes the multiplexed data, received from the LAN terminating circuit 3-a, into the radio frame transmission area determined according to the mapping control signal 7-a. That is, the radio frame multiplexing circuit(MUX) 4-a determines to which type of data, LAN data or the PDH data signal strings, the channels of the radio frame are to be assigned according to the mapping control signal 7-a that is set by the higher-level device (not shown). The radio frame multiplexing circuit(MUX) 4-a reads the LAN-received data from the receive buffer in the LAN terminating circuit 3-a, one packet at a time, at the speed corresponding to the channels to which the LAN data is assigned and multiplexes the packets into the payload of the specified channels. At the same time, the radio frame multiplexing circuit(MUX) 4-a accommodates stuff-processed PDH data signal strings, received from the stuffing circuits, in the channels assigned as the PDH data signal strings, configures the radio frame, and output the radio frame to the radio transmitting/receiving circuit 6-a.

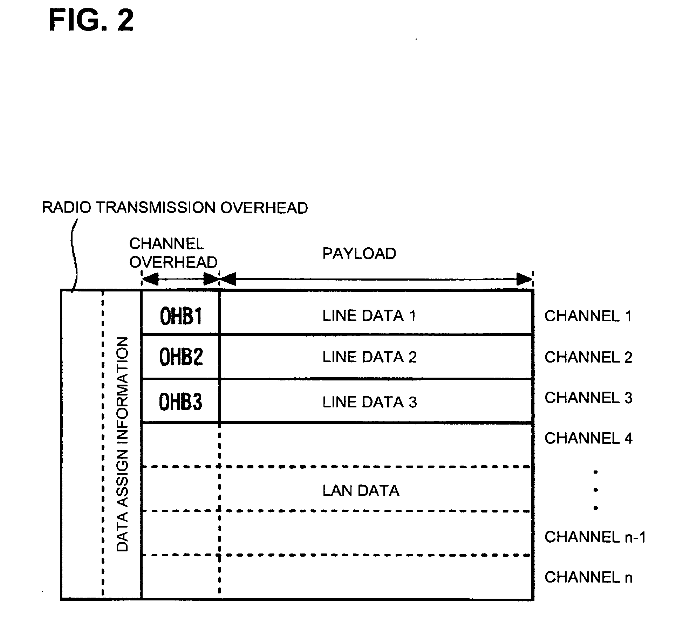

In this exemplary embodiment, the PDH data signal strings (line data) and the LAN data are assigned as shown in Fig. 2 wherein, when the LAN data is assigned to one or more channels of a radio frame, the payload of the corresponding channels and the overhead bits of the channels are all assigned as the LAN data area. In the radio frame channels corresponding to the LAN data, the LAN data stored in the buffer (not shown) of the LAN terminating circuit is stored unchanged (no load or phase adjustment in the channel overhead bits) in the payload area of the radio frame.

As shown in Fig. 2, the data channel assignment information (data assign information) on the payload of a radio frame is stored in the radio transmission overhead.

The radio frame transmission area, except the transmission area to which LAN data is assigned, is assigned as the transmission area for transmitting the channel overheads + the line data and, in this way, the radio frame data is generated.

The data assign information in the radio transmission overhead, shown in the example in Fig. 2, includes the information, which is notified to the remote receiving device, indicating that channels 1-3 of the radio frame, which will be transmitted, are assigned to line data 1, 2, 3 respectively and that channels 4-n are assigned to multiple channels of LAN data (the overheads of the channels are used also as the transmission area).

Referring again to Fig. 1, a radio header creation unit 41-a of the radio frame multiplexing circuit(MUX) 4-a sets the radio frame configuration information, including the channel assignment information on the radio frame, in the radio transmission overhead bits (OHB). The created radio frame data (radio transmission overhead bits and serial bit data in the payload) is output to the radio transmitting/receiving circuit 6-a. The radio transmitting/receiving circuit 6-a modulates the radio frame data and transmits the data to the remote radio transmission device B by carrying it at the radio frequency.

Next, the following describes the configuration of the receiving side by referring to the radio transmission device B. The data received from the radio transmission device A via the radio transmission line is demodulated by the radio transmitting/receiving circuit 6-b and, with radio frame synchronization established, the radio frame data is output to the radio frame demultiplexing circuit(DEMUX) 5-b.

After radio frame synchronization is established, a radio header analyzing unit 51-b of the radio frame demultiplexing circuit(DEMUX) 5-b analyzes the data assign configuration information, stored in the radio transmission overhead bits (OHB), and separately extracts from the radio frame the channels to which the LAN data is assigned and the channels to which the PDH data signal strings are assigned. Then, the radio frame demultiplexing circuit(DEMUX) 5-b outputs the channel data, to which the LAN data is assigned, to a LAN terminating circuit 3-b, and the channel data, to which the PDH data signal strings are assigned, to the corresponding destuffing circuits.

The LAN terminating circuit 3-b accumulates the LAN data, received from the radio frame demultiplexing circuit(DEMUX) 5-b, in the transmit buffer on a per packet base and outputs the accumulated LAN data to the LAN wired transmission lines 301-b to 30m-b. The transmission from the radio transmission devices B to A is the same as the transmission from the radio transmission devices A to B and so the description is omitted here.

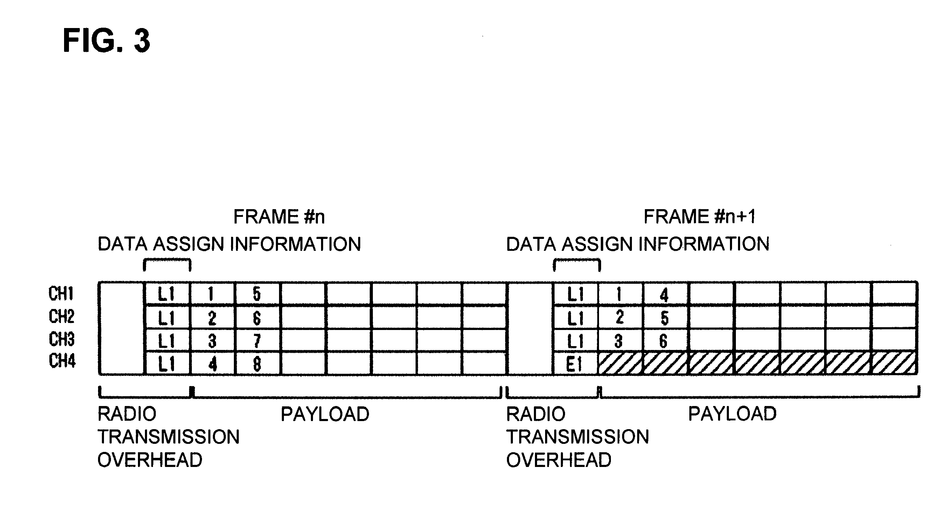

Fig. 3 is a diagram showing a radio frame in one exemplary embodiment of the present invention. In frame #n, the data assign information in the radio transmission overhead indicates that LAN data is assigned to channels #1 to #4. In Fig. 3, the numerals in the payload indicate the order in which the parallel bit data is converted to serial data. In the next frame #n+1, LAN data is assigned to channels #1 to #3 and line data is assigned to channel #4. The data assign information in the radio transmission overhead in frame #n+1 indicates that LAN is assigned to channels #1 to #3 and E1 is assigned to channel #4.

In this exemplary embodiment, even if the channel assignment in the payloads of consecutive frames is changed, the radio frame demultiplexing unit (DEMUX) can expand serial LAN data, transmitted in the multiplexed format, to parallel data based on the data assign information stored in the radio transmission overhead.

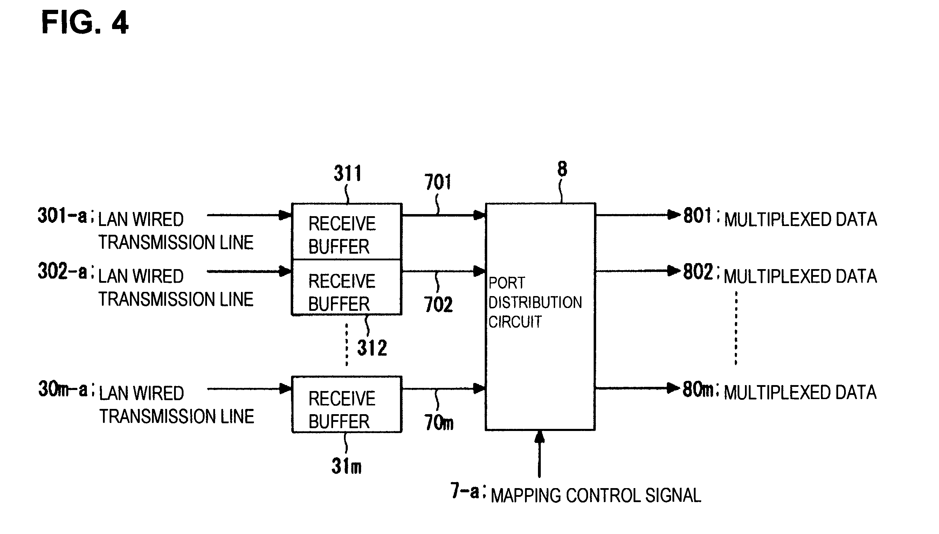

Fig. 4 is a diagram showing the main part of the configuration of the LAN terminating circuit 3-a shown in Fig. 1. The LAN terminating circuit 3-b of the radio transmission device B also has the same configuration. Referring to Fig. 4, the LAN-received data inputted from the LAN wired transmission lines 301-a to 30m-a is accumulated respectively in receive buffers 311-31m. A port distribution circuit 8 reads the LAN-received data from the receive buffers 311-31m, one packet at a time, and encapsulates the data. After that, the port distribution circuit 8 generates multiplexed data, which will be stored in the payload, according to the mapping control signal 7-a with the transmission capacity on the radio transmission line side corresponding to each LAN wired transmission line specified in units of channels of the radio frame.

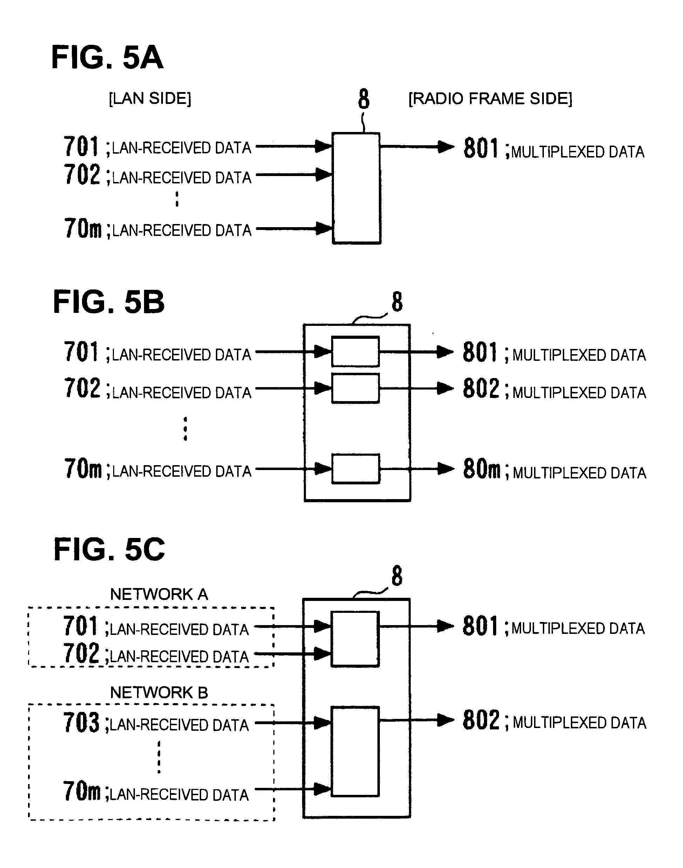

Figs. 5A to 5C are diagrams each showing an example of the configuration of the port distribution circuit 8 shown in Fig. 4. Referring to Fig. 5A, the port distribution circuit 8 combines LAN-received data 701 - 70m received from multiple LAN wired transmission lines and outputs multiplexed data 801. Referring to Fig. 5B, the port distribution circuit 8 outputs individual multiplexed data 801 - 80m, one for each of the LAN-received data 701 - 70m received from each of the LAN wired transmission lines. Referring to Fig. 5C, the port distribution circuit 8 combines multiple pieces of LAN-received data into a specified number of units and outputs multiplexed data.

In the example shown in Fig. 5C, two pieces of LAN-received data 701 and 702 are combined into one and the multiplexed data 801 is output, and multiple pieces of LAN-received data 703-70m are combined and one piece of multiplexed data 802 is output. When users of the LAN wired transmission lines are on the same network, the utilization efficiency of the radio band is increased by combining data into one band of a radio frame for transmission. When the connection destinations of multiple LAN wired transmission lines are separate networks, the radio-side bands may be assigned independently, one to each network, to prevent a decrease in the throughput caused by the flow of extra data from other networks and thereby to guarantee the radio-side transmission band of each network.

As described above, the radio transmission device in one exemplary embodiment of the present invention has the PDH data signal string interface and the LAN interface, maps the data on a radio frame channel basis to transmit the PDH data signal strings and the LAN data at the same time and, even when the radio frame configuration (LAN data channel assignment, transmission capacity) is changed between the consecutive radio frames, allows radio transmission to be performed without instantaneous interruptions.

In addition, the radio transmission device in one exemplary embodiment of the present invention allows the band of the radio transmission line side to be set individually for each LAN wired transmission line on a radio frame channel basis, thus enabling the provision of services in which the band of the radio transmission line side for each wired transmission line is guaranteed.

Although PDH data is used in the above exemplary embodiment as the line data signal strings that are multiplexed with LAN data in a radio frame for transmission, the present invention is of course applicable to SDH(Synchronous Digital Hierarchy) data. That is, according to the present invention, SDH data and LAN data may be multiplexed for radio transmission to a remote station.

The exemplary embodiments and the examples may be changed and adjusted in the scope of the entire disclosure (including claims) of the present invention and based on its basic technological concept. In the scope of the claims of the present invention, various disclosed elements may be combined and selected in a variety of ways. That is, it is to be understood that the present invention includes modifications and changes that may be made by those skilled in the art according to the entire disclosure, including the claims, and the technological concept.

## Claims

1. A radio transmission device that stuff-multiplexes a plurality of line data signal strings into a radio frame to transmit the radio frame, the device comprising
a means that inserts channel assignment information on data in a payload of the radio frame, into a radio transmission overhead and that multiplexes LAN data or LAN data and line data into the payload of the radio frame to perform radio-transmission of the multiplexed data.

2. The radio transmission device according to claim 1, wherein the LAN data, which is not subjected to framing processing, is mapped from a buffer, in which the LAN data is stored, directly into the radio frame, the framing processing performed for the line data signal strings.

3. A radio transmission device comprising
a means that on receipt of a radio frame whose radio transmission overhead includes channel assignment information on data, performs demultiplexing of LAN data or LAN data and line data multiplexed in a payload of the radio frame, based on the channel assignment information.

4. The radio transmission device according to any one of claims 1 to 3, wherein, when LAN data is assigned to the radio frame, both the payload of a corresponding channel and overhead bits of the channel are assigned as a LAN data area.

5. The radio transmission device according to any one of claims 1 to 4, wherein the line data is PDH(Plesiochronous Digital Hierarchy) or SDH(Synchronous Digital Hierarchy) data.

6. The radio transmission device according to one of claims 1 to 5, further comprising
a LAN terminating circuit that receives a mapping control signal for the radio frame and that maps LAN data input from a LAN wired transmission line, into a specified transmission area in the radio frame, based on the mapping control signal, thereby allowing PDH(Plesiochronous Digital Hierarchy) or SDH(Synchronous Digital Hierarchy) data and LAN data to be transmitted at the same time.

7. A radio transmission method comprising the steps of:
inserting channel assignment information on data in a payload of a radio frame into a radio transmission overhead; and
multiplexing LAN data or LAN data and line data into the payload of the radio frame to perform radio-transmission of the multiplexed data.

8. The radio transmission method according to claim 7, wherein the LAN data, which is not subjected to framing processing, is mapped from a buffer, in which the LAN data is stored, directly into the radio frame, the framing processing performed for the line data signal strings.

9. A radio transmission method comprising the step of:
receiving a radio frame whose over-header includes channel assignment information on data; and
demultiplexing of LAN data or LAN data and line data the LAN data multiplexed in a payload of the radio frame, based on the channel assignment information.

10. The radio transmission method according to any one of claims 7 to 9, wherein, when LAN data is assigned to the radio frame, both the payload of a corresponding channel and overhead bits of the channel are assigned as a LAN data area.

11. The radio transmission method according to any one of claims 7-10 wherein the line data is PDH(Plesiochronous Digital Hierarchy) or SDH(Synchronous Digital Hierarchy) data.

12. The radio transmission method according to any one of claims 7 to 11, further comprising the step of:
receiving a mapping control signal for the radio frame and
mapping LAN data inputted from a LAN wired transmission line, into a specified transmission area in the radio frame, based on the mapping control signal, thereby allowing PDH(Plesiochronous Digital Hierarchy) or SDH(Synchronous Digital Hierarchy) data and LAN data to be transmitted at the same time.

13. A radio transmission system comprising:
a transmitting device that inserts channel assignment information on at least LAN data stored in a payload of a radio frame, into a radio transmission overhead and that multiplexes LAN data or LAN data and line data into the payload of the radio frame to perform radio-transmission of the multiplexed data; and
a receiving device that, on receipt of a radio frame whose radio transmission overhead includes channel assignment information, demultiplexes data, multiplexed in the payload of the radio frame, based on the channel assignment information.

## Amended claims

### Amended claims under Art. 19.1 PCT

1. (Amended) A radio transmission device that stuff-multiplexes a plurality of line data signal strings into a radio frame to transmit the radio frame, the device comprising
a means that inserts serial-to-parallel conversion order information as channel assignment information on at least LAN data in a payload of a radio frame, into a radio transmission overhead and that multiplexes LAN data or LAN data and line data into the payload of the radio frame to perform radio-transmission of the multiplexed data.

2. The radio transmission device according to claim 1, wherein the LAN data, which is not subjected to framing processing, is mapped from a buffer, in which the LAN data is stored, directly into the radio frame, the framing processing performed for the line data signal strings.

3. A radio transmission device comprising
a means that on receipt of a radio frame whose radio transmission overhead includes channel assignment information on data, performs demultiplexing of LAN data or LAN data and line data multiplexed in a payload of the radio frame, based on the channel assignment information.

4. The radio transmission device according to any one of claims 1 to 3, wherein, when LAN data is assigned to the radio frame, both the payload of a corresponding channel and overhead bits of the channel are assigned as a LAN data area.

5. The radio transmission device according to any one of claims 1 to 4, wherein the line data is PDH(Plesiochronous Digital Hierarchy) or SDH(Synchronous Digital Hierarchy) data.

6. The radio transmission device according to one of claims 1 to 5, further comprising
a LAN terminating circuit that receives a mapping control signal for the radio frame and that maps LAN data input from a LAN wired transmission line, into a specified transmission area in the radio frame, based on the mapping control signal, thereby allowing PDH(Plesiochronous Digital Hierarchy) or SDH(Synchronous Digital Hierarchy) data and LAN data to be transmitted at the same time.

7. (Amended) A radio transmitting method comprising the steps of:
inserting serial-to-parallel conversion order information as channel assignment information on at least LAN data in a payload of a radio frame into a radio transmission overhead; and
multiplexing LAN data or LAN data and line data into the payload of the radio frame to perform radio-transmission of the multiplexed data.

8. The radio transmission method according to claim 7, wherein the LAN data, which is not subjected to framing processing, is mapped from a buffer, in which the LAN data is stored, directly into the radio frame, the framing processing performed for the line data signal strings.

9. A radio transmission method comprising the step of:
receiving a radio frame whose over-header includes channel assignment information on data; and
demultiplexing of LAN data or LAN data and line data the LAN data multiplexed in a payload of the radio frame, based on the channel assignment information.

10. The radio transmission method according to any one of claims 7 to 9, wherein, when the LAN data is assigned to the radio frame, both the payload of a corresponding channel and overhead bits of the channel are assigned as a LAN data area.

11. The radio transmission method according to any one of claims 7 to 10, wherein the line data is PDH(Plesiochronous Digital Hierarchy) or SDH(Synchronous Digital Hierarchy) data.

12. The radio transmission method according to any one of claims 7 to 11, further comprising the steps of:
receiving a mapping control signal for the radio frame and
mapping LAN data inputted from a LAN wired transmission line, into a specified transmission area in the radio frame, based on the mapping control signal, thereby allowing PDH(Plesiochronous Digital Hierarchy) or SDH(Synchronous Digital Hierarchy) data and LAN data to be transmitted at the same time.

13. (Amended) A radio transmission system comprising:
a transmitting device that inserts serial-to-parallel conversion order information as channel assignment information on at least LAN data stored in a payload of a radio frame, into a radio transmission overhead and that multiplexes LAN data or LAN data and line data into the payload of the radio frame to perform radio-transmission of the multiplexed data; and
a receiving device that, on receipt of a radio frame whose radio transmission overhead includes channel assignment information, demultiplexes data, multiplexed in the payload of the radio frame, based on the channel assignment information.
